# EUROPEAN PATENT SPECIFICATION

(11) **EP 2 684 740 B1**
(45) Date of publication and mention of the grant of the patent: **26.10.2016**
(21) Application number: 11860548.4
(22) Date of filing: 07.03.2011
(51) Int. Cl.: B60N 2/44, A47C 7/74, H05B 3/20

(54) **VEHICLE SEAT HEATER**
FAHRZEUGSITZHEIZUNG
SYSTÈME DE CHAUFFAGE DE SIÈGE DE VÉHICULE

(43) Date of publication of application: 15.01.2014
(73) Proprietor: Panasonic Intellectual Property Management Co., Ltd., Osaka 540-6207 (JP)
(72) Inventor: ABE, Norio, Osaka 540-6207 (JP); FUJIWARA, Yoshimitsu, Osaka 540-6207 (JP); HIOKI, Kazuaki, Osaka 540-6207 (JP); NISHIKAWA, Masanori, Osaka 540-6207 (JP); NAGAYAMA, Kazumi, Osaka 540-6207 (JP)
(74) Representative: Vigand, Philippe
(86) International application number: PCT/JP2011/001333
(87) International publication number: WO 2012/120559

(56) References cited:
- WO-A1-2010/137290
- JP-A- 6 005 352
- JP-A- 2003 173 859
- US-A1- 2006 157 465

## Description

### TECHNICAL FIELD

The present invention relates to a vehicle seat heater to be fitted to a vehicle seat.

### BACKGROUND ART

Conventionally, there has been known a vehicle seat heater which is placed between seat cover and seat pad (seat body) of an automobile or other vehicle seat to heat a person seated in the vehicle seat. As described in patent document 1 as an example, the vehicle seat heater is formed by laying a heater wire in a base sheet having flexibility. The vehicle seat heater has a central portion placed in a seat central portion of the vehicle seat, and side portions placed in seat side portions of the vehicle seat.

Patent Document 1:Japanese Laid-open Patent publication No. 2003-173859

### SUMMARY OF INVENTION

### Technical Problem

However, on such occasions as a person is seated in or released from the seat central portion, the seat side portions of the vehicle seat are deformed mostly laterally by contact with the person. As a result, the side portions of the vehicle seat heater placed at the seat side portions are also deformed laterally. Repeated deformations of the side portions of the vehicle seat heater to such a level as to cause wrinkle lines may lead to occurrence of disconnections at portions of the heater wire intersecting the wrinkle lines.

Accordingly, an object of the present invention is to suppress disconnections of a heater wire in side portions of the vehicle seat heater placed at seat side portions of the vehicle seat.

### Solution to Problem

In order to achieve the above object, the present invention has the following constitutions.

According to a first aspect of the present invention, there is provided a vehicle seat heater which is to be fitted to a vehicle seat and which comprises a base sheet, and a heater wire laid in the base sheet, the vehicle seat heater including:
a reinforcing sheet attached in a side portion of the vehicle seat heater placed in a seat side portion of the vehicle seat, wherein
edges of the reinforcing sheet have opposing portions extending in back-and-forth directions of the side portion and opposing each other at least on a front side of the side portion, and
a laying area for the heater wire is provided between the opposing portions of edges of the reinforcing sheet.

### Advantageous Effects of Invention

According to the invention, in side portions of the vehicle seat heater, wrinkle lines occur at positions of no intersections with the heater wire along portions of the reinforcing sheet extending in back-and-forth directions of the edges of the reinforcing sheet and opposing each other. Also, the reinforcing sheet can suppress occurrence of wrinkle lines in portions where the reinforcing sheet is attached, i.e., in the heater-wire laying area between opposing portions of edges of the reinforcing sheet. As a result of this, disconnections of the heater wire can be suppressed in the side portions of the vehicle seat heater.

### BRIEF DESCRIPTION OF DRAWINGS

Fig. 1 is a perspective view of a vehicle seat equipped with a vehicle seat heater according to an embodiment of the invention;
Fig. 2 is a top view of the vehicle seat heater shown in Fig. 1;
Fig. 3 is an enlarged view of a side portion of the vehicle seat heater shown in Fig. 1; and
Fig. 4 is an enlarged view of a side portion of a vehicle seat heater according to another embodiment of the invention.

### DESCRIPTION OF EMBODIMENTS

In one embodiment of the invention, there is provided a vehicle seat heater which is to be fitted to a vehicle seat and which comprises a base sheet, and a heater wire laid in the base sheet, the vehicle seat heater including a reinforcing sheet attached in a side portion of the vehicle seat heater placed in a seat side portion of the vehicle seat, wherein edges of the reinforcing sheet have opposing portions extending in back-and-forth directions of the side portion and opposing each other at least on a front side of the side portion, and a laying area for the heater wire is provided between the opposing portions of edges of the reinforcing sheet.

According to this invention, in side portions of the vehicle seat heater, wrinkle lines occur at positions of no intersections with the heater wire along portions of the reinforcing sheet extending in back-and-forth directions of the edges of the reinforcing sheet and opposing each other. Also, the reinforcing sheet can suppress occurrence of wrinkle lines in portions where the reinforcing sheet is attached, i.e., in the heater-wire laying area between opposing portions of the edges of the reinforcing sheet. As a result of this, disconnections of the heater wire can be suppressed in the side portions of the vehicle seat heater.

Further, the heater wire may extend from a rear side of the side portion and turn over on a front side of the side portion. In this case, the reinforcing sheet has such a shape as to overlap at least with the heater wire and an area surrounded in three sides by the heater wire, as the vehicle seat heater is viewed from the top. As a result, wrinkle lines occur at positions of no intersections with the heater wire along the edges of the reinforcing sheet.

Also, the reinforcing sheet may have a V-shaped fore end. As a result of this, even if the fore end of the seat side portion of the vehicle seat is deformed in any direction other than the lateral direction, wrinkle lines occur along the edges of the V-shaped fore end of the reinforcing sheet without intersecting the heater wire.

Also, the reinforcing sheet may be attached on a surface of the base sheet in which the heater wire is laid. As a result of this, the heater wire is sandwiched and protected between the reinforcing sheet and the base sheet.

Also, the opposing portions of edges of the reinforcing sheet may be linear-shaped. As a result of this, wrinkle lines that are more likely to occur due to lateral deformations of the seat side portions of the vehicle seat and that extend in back-and-forth directions of the side portions of the vehicle seat heater occur along the opposing portions of the edges of the reinforcing sheet.

Also, the heater wire may be laid in the side portion so as not to orthogonally intersect a virtual line extending in back-and-forth directions of the side portion. As a result of this, disconnections of the heater wire due to repeated lateral deformations of the portion where the reinforcing sheet is attached, i.e. the laying area of the heater wire, can be suppressed.

Hereinbelow, an embodiment of the present invention will be described with reference to the accompanying drawings. It is noted that the present invention is not limited by the following embodiment.

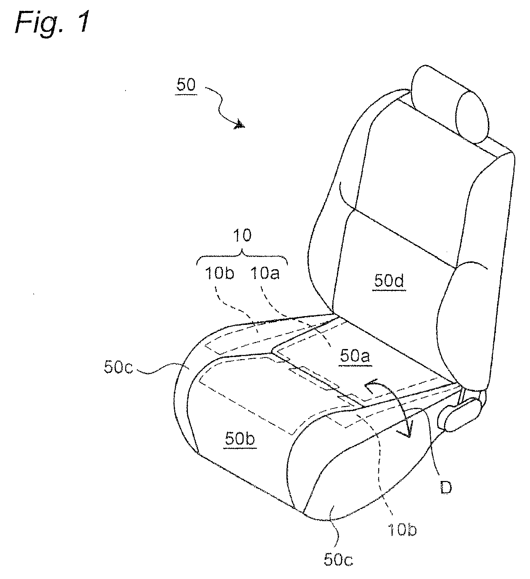

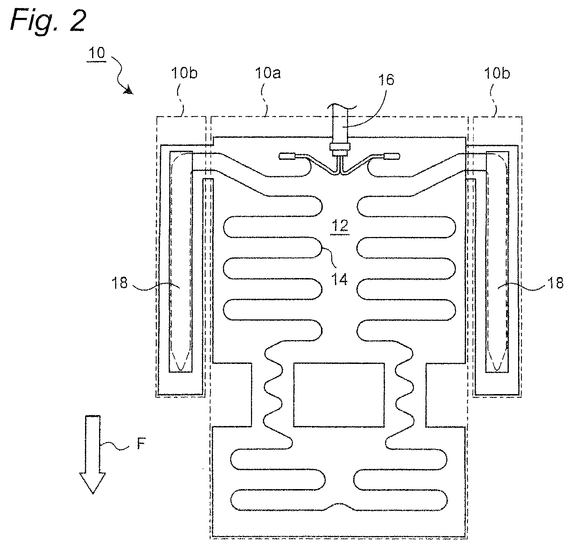

Fig. 1 shows a vehicle seat equipped with a vehicle seat heater according to an embodiment of the invention. Fig. 2 is a top view of the vehicle seat heater of Fig. 1.

As shown in Fig. 1, a vehicle seat 50 has a plurality of seat covers made from, for example, artificial leather or the like, and a seat pad (seat body) covered by the seat covers and made from, for example, urethane foam or the like. A vehicle seat heater 10 is placed between the seat covers and the seat pad. Also, the vehicle seat heater 10 is placed so as to extend from a central portion 50a of the vehicle seat 50 for supporting human buttocks to a front portion 50b for supporting thighs as well as to seat side portions 50c positioned beside the central portion 50a.

As shown in Fig. 2, the vehicle seat heater 10 has a base sheet 12, a heater wire 14 laid in the base sheet 12, and a harness 16 for feeding electric power to the heater wire 14.

The vehicle seat heater 10 also has a central portion 10a placed over the central portion 50a and the front portion 50b of the vehicle seat 50, and side portions 10b placed at the seat side portions 50c.

The base sheet 12 of the vehicle seat heater 10 is made from, for example, nonwoven fabric.

The heater wire 14 of the vehicle seat heater 10, which is a metal wire as an example, is sewed to the base sheet 12 by thread (not shown). Alternatively, the heater wire 14 may also be sewed into the base sheet 12 like thread or bonded thereto by thermal fusion or the like. In short, the way for fixing the heater wire 14 to the base sheet 12 is not limited to sewing. Also, the heater wire 14 extends from the harness 16, which is attached at a rear end of the central portion 10a, to a fore end of one side portion 10b, and further extends so as to turn over at the fore end of the side portion 10b and return to the central portion 10a. After returning to the central portion 10a, the heater wire 14 extends toward a fore end of the central portion 10a, and turns over at the fore end of the central portion 10a to extend toward the other side portion 10b. The heater wire 14 then extends so as to turn over at a fore end of the other side 10b and return to the harness 16.

It is noted here that herein, the term "back-and-forth directions" refers to back-and-forth directions of the vehicle seat 50. Also, the term "lateral direction" refers to a direction orthogonal to the "back-and-forth directions." In the figure, an arrow F denotes the "forth direction."

The vehicle seat heater 10 further has reinforcing sheets 18 to be attached to the side portions 10b. The reinforcing sheets 18 are for suppressing occurrence of wrinkle lines so as to prevent wrinkle lines from intersecting with the heater wire 14 in the side portions 10b of the vehicle seat heater 10.

For more explanation, as shown in Fig. 1, the seat side portions 50c of the vehicle seat 50 are deformed mostly laterally, as shown by an arrow D, by contact with a person on such occasions as the person is seated in or released from the central portion 50a.

Naturally, in correspondence to lateral deformations of the seat side portions 50c, the side portions 10b of the vehicle seat heater 10 are also deformed mostly laterally. Then, wrinkle lines extending in the back-and-forth directions of the side portions 10b occur, so that portions of the heater wire intersecting those wrinkle lines may be disconnected. As a countermeasure for this, the reinforcing sheets 18 are provided so as to suppress occurrence of wrinkle lines so that wrinkle lines do not intersect the heater wire 14 in the side portions 10b.

More specifically, first, each reinforcing sheet 18 is made from a material that is the same as that of the base sheet 12 (including those of different thicknesses) or such a material as resin film that is less liable to occurrence of wrinkle lines as compared with the base sheet 12. In addition, preferably, the reinforcing sheet 18 has such flexibility as to keep cushionability of the seat side portions 50c of the vehicle seat 50. Portions where such reinforcing sheets 18 are attached become higher in rigidity, so that occurrence of wrinkle lines at those portions is suppressed.

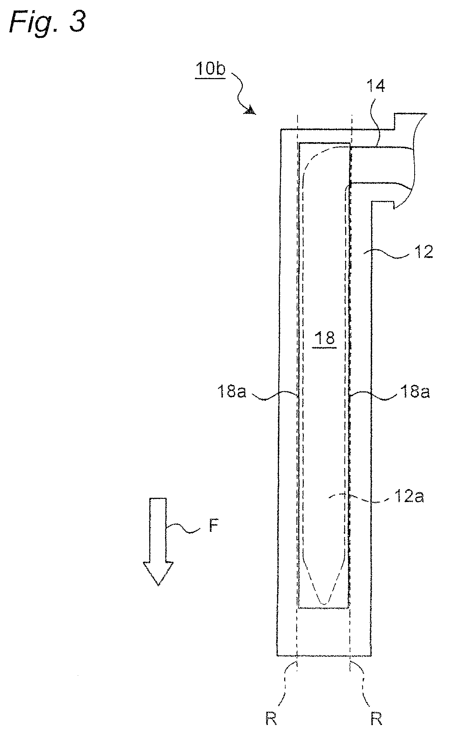

The reinforcing sheet 18 also includes edge portions 18a extending in back-and-forth directions of the side portion 10b and opposing each other as shown in Fig. 3, which is an enlarged view of one side portion 10b of the vehicle seat heater 10. A laying area for the heater wire 14 is provided between the edge portions 18a.

More concretely, the reinforcing sheet 18 has such a shape as to overlap at least with the heater wire 14 and an area 12a of the base sheet 12 surrounded in three sides thereof by the heater wire 14, as the vehicle seat heater 10 is viewed from the top (as in Fig. 2 or 3).

For more explanation, when the side portion 10b of the vehicle seat heater 10 is deformed laterally by a lateral deformation of the seat side portion 50c of the vehicle seat 50 as described above, wrinkle lines R occur along the edge portions 18a of the reinforcing sheet 18, as shown in Fig. 3. Therefore, attaching the reinforcing sheet 18 in the side portion 10b so that the heater wire 14 is positioned between the opposing edge portions 18a makes it possible to prevent wrinkle lines R occurring along the edge portions 18a from intersecting with the heater wire 14 at least on the front side of the side portion 10b.

In Fig. 3, wrinkle lines R occurring along the edge portions 18a of the reinforcing sheet 18 extend from fore end to rear end of the side portion 10b of the vehicle seat heater 10. However, actually, wrinkle lines R occur mostly on the front side of the side portion 10b (otherwise, deeper wrinkle lines occur on the front side than on the rear side). The reason of this is that the rear side of seat side portions 50c of the vehicle seat 50, which is closer to a backrest portion 50d as shown in Fig. 1, is less likely to be largely deformed by contact with a person, as compared with the front side of the seat side portions 50c. Thus, the heater wire 14, although intersecting the wrinkle lines R on the rear side of the side portion 10b in Fig. 3, yet is less likely to be disconnected at those intersecting points.

Preferably, each edge portion 18a of the reinforcing sheet 18 is linear-shaped as shown in Fig. 3. However, the edge portion 18a may also be partly bent in accordance with the shape of the vehicle seat heater or are in a circular shape. Since the seat side portions 50c of the vehicle seat 50 are deformed mostly laterally as described before, back-and-forth extending linear-shaped wrinkle lines are more likely to occur in the side portions 10b of the vehicle seat heater 10 even in the absence of the reinforcing sheet 18. Therefore, the edge portions 18a are preferably linear-shaped in order that the back-and-forth extending linear-shaped wrinkle lines, which are more likely to occur due to lateral deformations of the seat side portions 50c of the vehicle seat 50, are let to occur along the edge portions 18a of the reinforcing sheet 18.

In addition, for this invention, the edges of the reinforcing sheet 18 are not limited to the linear-shaped ones. In wider sense, it is necessary only that wrinkle lines occurring along the edge portions or in adjacency to the edges are prevented from intersecting with the heater wire at least on the front side of the side portions 10b of the vehicle seat heater 10.

As described hereinabove, according to this embodiment, in the side portions 10b of the vehicle seat heater 10, wrinkle lines R occur at positions of no intersections with the heater wire 14 so as to extend in back-and-forth directions of the edges of the reinforcing sheet 18 along the opposing portions 18a. Also, the reinforcing sheet 18 can suppress occurrence of wrinkle lines at portions where the reinforcing sheet 18 is attached, i.e., in a laying area for the heater wire 14 between the opposing portions 18a of the edges of the reinforcing sheets 18. As a result of this, disconnections of the heater wire 14 can be suppressed in the side portions 10b of the vehicle seat heater 10.

The present invention has been described by way of embodiment above. However, the invention is not limited to the above embodiment.

For example, the reinforcing sheet to be attached in each side portion of the vehicle seat heater is not limited to such a shape as shown in Fig. 3.

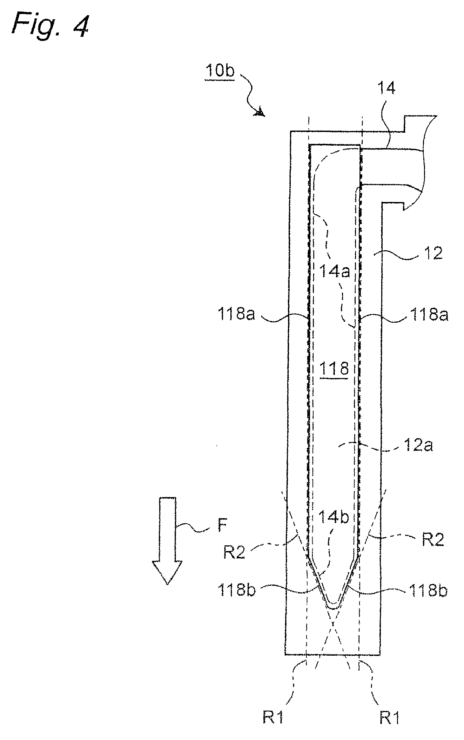

Fig. 4 shows a reinforcing sheet in another shape different from the reinforcing sheets 18 of Fig. 2. The reinforcing sheet 118 shown in Fig. 4 has a profile parallel to the heater wire 14 laid in the side portion 10b of the vehicle seat heater 10 and moreover has such a shape as to overlap at least with the heater wire 14 and an area 12a of the base sheet 12 surrounded in three sides by the heater wire 14, as the vehicle seat heater 10 is viewed from the top.

More concretely, the heater wire 14 laid in the side portion 10b of the vehicle seat heater 10 includes two linear portions 14a extending linearly from rear end toward fore end of the side portion 10b, and a V-shaped portion 14b connecting together fore ends of the two linear portions 14a. The reinforcing sheet 118 includes edge portions 118a extending parallel to the linear portions 14a of the heater wire 14, and edge portions 118b extending parallel to the V-shaped portion 14b and defining a V-shaped tip end.

In this case, wrinkle lines R1 occur mostly along the edge portions 118a, while wrinkle lines R2 occur along the edge portions 118b. Neither of the wrinkle lines R1, R2 intersects with the heater wire 14 in the front side of the side portion 10b. In a case, as in this reinforcing sheet 118, where the reinforcing sheet has a profile extending parallel to the heater wire, less materials are necessitated to make up the reinforcing sheet, advantageously.

Further, the fore end of each seat side portion of the vehicle seat is liable to occurrence of deformations in directions other than the lateral direction, especially in diagonal directions (directions between the lateral direction and the back-and-forth directions) due to contact of a person's thigh back on seating in or releasing from the seat or the like. For this reason, the fore end of the reinforcing sheet is preferably formed into a V-shape, like the reinforcing sheet 118 shown in Fig. 4. As a result of this, even if the fore end of the seat side portion of the vehicle seat is deformed in directions other than the lateral direction, wrinkle lines occur along the V-shaped fore end of the reinforcing sheet without intersecting the heater wire.

As shown above (as shown by the reinforcing sheet 18 of Fig. 3 or the reinforcing sheet 118 of Fig. 4), the reinforcing sheet of this invention may be embodied in various forms and shapes on the assumption that the reinforcing sheet includes edge portions extending in back-and-forth directions of the side portions and opposing each other at least on the front side of the side portions of the vehicle seat heater.

In the case of the above-described embodiment, as shown in Fig. 3 as an example, the reinforcing sheet 18 is attached on a surface of the base sheet 12 in which the heater wire 14 is placed, so that the reinforcing sheet 18 protects the heater wire 14. However, without the need for such protection, the reinforcing sheet 18 may be attached on the opposite-side surface. As described above, the reinforcing sheet 18 suppresses occurrence of wrinkle lines in portions where the reinforcing sheet 18 is attached, or lets wrinkle lines occur along the edge portions 18a. Therefore, functions of the reinforcing sheet 18 are never impaired even though the reinforcing sheet 18 is attached on any one of the two surfaces of the base sheet 12.

Further, in the case of the above embodiment, the reinforcing sheet 18 is so sized as to extend from fore end to rear end of one side portion 10b of the vehicle seat heater 10 as shown in Fig. 3. However, the present invention is not limited to this. For example, the reinforcing sheet may be so sized as to extend from the fore end of the side portion 10b to a generally center of the side portion 10b. This is because wrinkle lines occur mostly on the front side of the side portions 10b of the vehicle seat heater 10 as described above.

Furthermore, the heater wire to be laid in the side portions of the vehicle seat heater is preferably laid in the side portions so as not to orthogonally intersect the back-and-forth directions of the side portions (a virtual straight line extending in the back-and-forth directions).

The reinforcing sheet, having flexibility as described above, suppresses occurrence of wrinkle lines in the side portions of the vehicle seat heater where the reinforcing sheet is attached, but the reinforcing sheet does not restrict deformations at those portions. Therefore, by a lateral deformations of the seat side portions of the vehicle seat, the portions where the reinforcing sheets are attached are also deformed laterally. In order to prevent the heater wire from being disconnected by repetitions of such deformations, the heater wire is preferably laid in the side portions so as not to orthogonally intersect the back-and-forth directions of the side portions of the vehicle seat heater as shown in Fig. 3 or Fig. 4.

Although the present invention has been fully described in connection with the preferred embodiments thereof with reference to the accompanying drawing, it is to be noted that various changes and modifications are apparent to those skilled in the art. Such changes and modifications are to be understood as included within the scope of the present invention as defined by the appended claims unless they depart therefrom.

### INDUSTRIAL APPLICABILITY

The present invention is applicable not only to the vehicle seat heater 10 that is placed over the central portion 50a, the front portion 50b and the seat side portions 50c of the vehicle seat 50 shown in Fig. 1, but also vehicle seat heaters provided in the backrest portion that supports the human back.

### REFERENCE SIGNS LIST

- 10: vehicle seat heater
- 10b: side portion
- 12a: area
- 14: heater wire
- 18: reinforcing sheet
- 18a: portion (edge portion)
- 118: reinforcing sheet
- 118a: portion (edge portion)
- 118b: portion (edge portion)

## Claims

1. A vehicle seat heater (10) which is to be fitted to a vehicle seat (50) and which comprises a base sheet (12), and a heater wire (14) laid in the base sheet (12), **characterized by**
a reinforcing sheet (18, 118) attached in a side portion (10b) of the vehicle seat heater (10) placed in a seat side portion (10b) of the vehicle seat, wherein
edges of the reinforcing sheet (18, 118) have opposing portions (18a, 118a) extending in back-and-forth directions (F) of the side portion (10b) and opposing each other at least on a front side of the side portion (10b), and
a laying area for the heater wire (14) is provided between the opposing portions (18a, 118a) of edges of the reinforcing sheet (18, 118).

2. The vehicle seat heater (10) according to claim 1, wherein the heater wire (14) extends from a rear side of the side portion (10b) and turns over on the front side of the side portion (10b), and the reinforcing sheet (18, 118) has such a shape as to overlap at least with the heater wire (14) and an area (12a) surrounded in three sides by the heater wire (14) as the vehicle seat heater (10) is viewed from top.

3. The vehicle seat heater (10) according to claim 2, wherein the reinforcing sheet (118) has a V-shaped fore end.

4. The vehicle seat heater (10) according to any one of claims 1 to 3,
wherein the reinforcing sheet (18, 118) is attached on a surface of the base sheet (12) in which the heater wire (14) is laid.

5. The vehicle seat heater (10) according to any one of claims 1 to 4,
wherein the opposing portions (18a, 118a) of the edges of the reinforcing sheet (18, 118) are linear-shaped.

6. The vehicle seat heater (10) according to any one of claims 1 to 5,
wherein the heater wire (14) is laid in the side portion (10b) so as not to orthogonally intersect a virtual straight line extending in back-and-forth directions (F) of the side portion (10b).

## Patentansprüche

1. Fahrzeugsitzheizung (10), die an einem Fahrzeugsitz (50) anzubringen ist, und die eine Grundfolie (12) und einen in die Grundfolie (12) eingelegten Heizdraht (14) aufweist, **gekennzeichnet durch**
eine Verstärkungsfolie (18, 118), die in einem Seitenabschnitt (10b) der Fahrzeugsitzheizung (10) angebracht und in einem Sitzseitenabschnitt (10b) des Fahrzeugsitzes platziert, wobei
Kanten der Verstärkungsfolie (18, 118) gegenüberliegende Abschnitte (18a, 118a) aufweisen, die sich in Rückwärts und Vorwärtsrichtungen (F) des Seitenabschnitts (10b) erstrecken und einander mindestens auf einer Vorderseite des Seitenabschnitts (10b) gegenüberstehen, und
eine Verlegefläche für den Heizdraht (14) zwischen den einander gegenüberliegenden Abschnitten (18a, 118a) der Kanten der Verstärkungsfolie (18, 118) bereitgestellt ist.

2. Fahrzeugsitzheizung (10) nach Anspruch 1, wobei sich der Heizdraht (14) von einer Rückseite des Seitenabschnitts (10b) erstreckt und umkehrt auf die Vorderseite des Seitenabschnitts (10b), und die Verstärkungsfolie (18, 118) von solcher Form ist, dass sie, bei Draufsicht auf die Fahrzeugsitzheizung (10), sich mindestens mit dem Heizdraht (14) und einem Bereich (12a), der auf drei Seiten vom Heizdraht (14) umgeben ist, überschneidet.

3. Fahrzeugsitzheizung (10) nach Anspruch 2, wobei die die Verstärkungsfolie (118) ein V-förmiges Vorderende hat.

4. Fahrzeugsitzheizung (10) nach einem der Ansprüche 1 bis 3,
wobei die Verstärkungsfolie (18, 118) auf einer Fläche der Grundfolie (12) angebracht wird, in der der Heizdraht (14) verlegt wird.

5. Fahrzeugsitzheizung (10) nach einem der Ansprüche 1 bis 4,
wobei die einander gegenüberliegenden Abschnitte (18a, 118a) der Kanten der Verstärkungsfolie (18, 118) linienförmig sind.

6. Fahrzeugsitzheizung (10) nach einem der Ansprüche 1 bis 5,
wobei der Heizdraht (14) im Seitenabschnitt (10b) verlegt ist, um nicht eine virtuelle gerade Linie, die sich in Rückwärts und Vorwärtsrichtungen (F) des Seitenabschnitts (10b) erstrecken, rechtwinklig zu schneiden.

## Revendications

1. Dispositif de chauffage de siège de véhicule (10) qui doit être monté sur un siège de véhicule (50) et qui comprend une feuille de base (12) et un fil de dispositif de chauffage (14) posé dans la feuille de base (12), **caractérisé par**
une feuille de renforcement (18, 118) fixée dans une partie latérale (10b) du dispositif de chauffage de siège de véhicule (10) placée dans une partie latérale de siège (10b) du siège de véhicule, dans lequel
les bords de la feuille de renforcement (18, 118) ont des parties opposées (18a, 118a) s'étendant dans des directions avant et arrière (F) de la partie latérale (10b), et opposées entre elles au moins sur un côté avant de la partie latérale (10b), et
une zone de pose pour le fil de dispositif de chauffage (14) est prévue entre les parties opposées (18a, 118a) des bords de la feuille de renforcement (18, 118).

2. Dispositif de chauffage de siège de véhicule (10) selon la revendication 1, dans lequel le fil de dispositif de chauffage (14) s'étend à partir d'un côté arrière de la partie latérale (10b) et tourne sur le côté avant de la partie latérale (10b) et la feuille de renforcement (18, 118) a une forme telle qu'elle chevauche sur le fil de dispositif de chauffage (14) et une zone (12a) entourée sur trois côtés par le fil de dispositif de chauffage (14) lorsque le dispositif de chauffage de siège de véhicule (10) est vu de dessus.

3. Dispositif de chauffage de siège de véhicule (10) selon la revendication 2, dans lequel la feuille de renforcement (118) a une extrémité avant en forme de V.

4. Dispositif de chauffage de siège de véhicule (10) selon l'une quelconque des revendications 1 à 3, dans lequel la feuille de renforcement (18, 118) est fixée sur une surface de la feuille de base (12) dans laquelle le fil de dispositif de chauffage (14) est posé.

5. Dispositif de chauffage de siège de véhicule (10) selon l'une quelconque des revendications 1 à 4,
dans lequel les parties opposées (18a, 118a) des bords de la feuille de renforcement (18, 118) ont une forme linéaire.

6. Dispositif de chauffage de siège de véhicule (10) selon l'une quelconque des revendications 1 à 5,
dans lequel le fil de dispositif de chauffage (14) est posé dans la partie latérale (10b) pour ne pas couper de manière orthogonale une ligne droite virtuelle s'étendant dans les directions avant et arrière (F) de la partie latérale (10b).
